# EUROPEAN PATENT SPECIFICATION

(11) **EP 1 556 916 B1**
(45) Date of publication and mention of the grant of the patent: **06.12.2006**
(21) Application number: 03740313.6
(22) Date of filing: 23.06.2003
(51) Int. Cl.: H01M 4/90, C08G 8/08

(54) **PLATINUM-FREE ELECTROCATALYST MATERIALS**
PLATIN-FREIER ELEKTROKATALYSATOR
MATERIAUX D'ELECTROCATALYSEUR SANS PLATINE

(30) Priority: 21.10.2002 IT MI20022229; 21.10.2002 IT MI20022230
(43) Date of publication of application: 27.07.2005
(73) Proprietor: Idea Lab S.R.L., 20093 Cologno Monzese (IT)
(72) Inventor: BERT, Paolo, I-22100 Como (IT); BIANCHINI, Claudio, I-50136 Firenze (IT)
(74) Representative: Gervasi, Gemma
(86) International application number: PCT/EP2003/006592
(87) International publication number: WO 2004/036674

(56) References cited:
- US-A- 4 828 941
- US-A- 5 240 893
- LENKA S ET AL: "SYNTHETIC RESINS: XV. CHELATION ION EXCHANGE PROPERTIES OF 2,4-DINITROPHENYLHYDRAZONE OF RESACETOPHENONE-FORMALDEHYDE RESIN" POLYMER INTERNATIONAL, BARKING, GB, vol. 29, no. 2, 1992, pages 103-106, XP008031102
- AICH R ET AL: "SYNTHETIC RESINS XXIX: SYNTHESIS AND CHARACTERISATION OF THE RESINS DERIVED FROM2,4-DINITROPHENYLHYDRAZONE DERIVATIVES OF RESACETOPHENONE-FURFURAL-SUBSTITUTED HYDROXY-AROMATIC COMPOUNDS" POLYMER INTERNATIONAL, BARKING, GB, vol. 34, no. 3, 1994, pages 319-326, XP001191171

## Description

### Field of the invention

The present invention pertains in general to supported catalysts based on transition metals, other than platinum, and to their use in fuel cells, which are suitable for a variety of uses such as anodes and cathodes in fuel cells, as reformer catalysts, as oxidation catalysts, as water-gas shift catalysts, in metal-air batteries, as oxygen sensors and oxygen recombination catalysts. In particular, this invention relates to catalysts specifically designed for application as either alcohol-tolerant cathode materials for catalytic oxygen reduction or anode materials for catalytic oxidation of fuel molecules.

### State of the art

Fuel cells are electrochemical devices that convert the chemical energy of a reaction directly into electrical power. In such cells, a fuel (generally hydrogen, alcohols or saturated hydrocarbons) and an oxidant (generally oxygen from air) are fed in a continuous supply to the electrodes. Theoretically, a fuel cell can produce electrical energy for as long as the fuel and oxidant are supplied to the electrodes. In reality, degradation or malfunction of the components limits the practical operating life of fuels cells.

A variety of fuel cells are in different stages of development; considering, in particular, fuel cells in which electrocatalysts of the type described and claimed in the present invention can be used, the following can be mentioned as examples: Polymer Electrolyte Fuel cells (PEFC) fuelled with H₂, Direct Oxidation Fuel Cells (DOFC) fuelled with alcohols (Direct Alcohol Fuel Cell, DAFC) or with any other hydrogen-containing liquid or gaseous fuel (alcohols, glycols, aldehydes, saturated hydrocarbons, carboxylic acids, etc), Phosphoric Acis Fuel Cells (PAFC) and Molten Carbonate Fuel Cells (MCFC).

Essential components of any fuel cell of the types mentioned above are the electrodes that in general contain metals or metal particles supported on porous carbon materials bound to a suitable conductor. Catalysts usually employed for reducing the oxygen comprise transition metals, such as platinum, nickel, cobalt, silver, to mention but a few. Catalysts usually employed for oxidizing the fuel (for example H₂ in the PEFCs and methanol in the Direct Methanol Fuel Cells (DMFC) are platinum, platinum-ruthenium, platinum-ruthenium-molybdenum and platinum-tin mixtures. All the fuel cells producing an acceptable cell potential (> 0.5 V) contain platinum, alone or in conjunction with other metals, preferably ruthenium, at the anode, while the cathode is generally formed by platinum, yet other metals can be equally employed. The preferred presence of platinum, generally in high loadings, represents a major economic limitation to the mass production of fuel cells for transportation, cellular phones and electronic devices in general. Indeed, the high cost of platinum (currently, around 25-30 USD/g) contributes to make the cost of power produced by a fuel cell much greater than the cost of other power generation alternatives. Moreover, platinum-based cathodes in DMFC's are sensitive to cross-over methanol. Given the higher efficiency of fuel cells as compared to traditional power generation methods as well as their environmentally benign nature, it is highly desirable to develop fuel cells that do not require platinum.

To the best of the applicant's knowledge, platinum is an essential component in the anodes for the DOFCs or PEFCs available at present.

US-A-4828941 describes methanol/air fuel cells where the cathode contains as the catalytic component, a Co(salen) compound or a polymer containing this compound. It is not possible to dispense with platinum as a catalyst for the oxidation of methanol in the claimed electrochemical cell.

In US-A-6245707 is illustrated the synthesis of methanol-tolerant cathodes for oxygen reduction, obtained by mixing together and heat-treating at least two different transition metal-containing nitrogen chelates. The nitrogen chelates comprise metalloporphyrins and preferred transition metals are iron, cobalt, nickel, copper, manganese, ruthenium, vanadium and zinc.

Catalysed cathodes for fuel cells, comprising a mixture of cobalt acetate and polyacrilonitrile are described in US-A-5358803.

US-A-5240893 describes a method of preparing electrodes, in particular cathodes, formed with pyrolised metal-heterocarbon-nitrogen material where the metal is cobalt, nickel, iron, copper, vanadium, chromium, and manganese and mixtures thereof. A polymer is obtained by reacting an amine compound with formaldehyde or polymerised formaldehyde in the presence of an alkali catalyst. The polymer, isolated or formed in situ, is reacted with carbon particles and a metal salt to give a polymerised product in the form of a gel, which is baked at 800 °C for 1 h. The resulting powder is mixed with a binder and used to make electrodes. Irrespective of the metal dopant, the specific power supplied by these cathodes consists of a few tens of mW/cm² at low current density.

DE-A-2549083 reports the preparation of platinum-free cathodes for fuel cells, based on iron phthalocyanines.

WO-A-0196264 describes Fischer-Tropsch catalysts constituted by a matrix comprising a polymer, generally polyacrylate or polymetacrylate, and at least two metals, one of which being iron, cobalt, nickel and chromium, the other metal being iron, silver, zinc, platinum, zirconium, or mixtures thereof.

### Descriptions of the drawings

Fig. 1 represents a cross-section schematic view of a simplified fuel cell operating with the catalyst of the invention.
Fig. 2 reports the anodic polarization curves for the different materials in 2N H₂SO₄ -1N CH₃OH solution saturated with air.
Fig. 3 shows the cathodic polarization curves for the different materials in 2N H₂SO₄ - 1N CH₃OH solution saturated with air.
Fig. 4 shows the anodic polarization curves for the different materials in 1 N KOH - 1 N CH₃OH solution saturated with air.

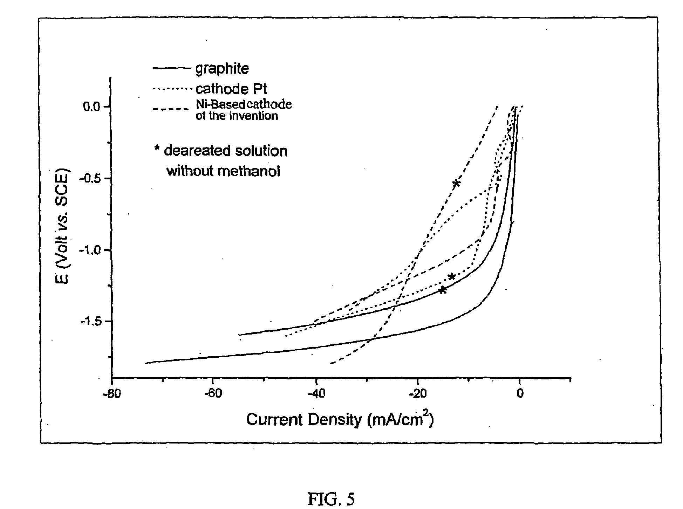

Fig. 5 shows the cathodic polarization curves for the different materials in 1 N KOH - 1N CH₃OH solution saturated with air.
Fig. 6 shows the change with time of the performance of a DMFC using the electrodes made with catalysts the invention.

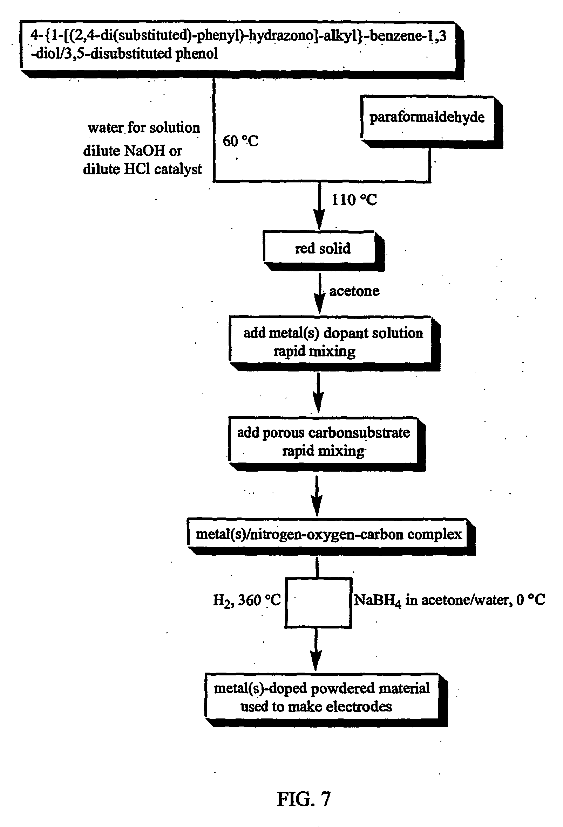

Fig. 7 shows in a flow diagram the various process steps from the starting reagents for preparing the polymer down to the metal-doped catalytic materials used for producing the electrodes.

### Detailed description of the invention

The Applicant has now found that new templating polymers, formed by condensation of a 4-{1-[(2,4-di(substituted)-phenyl)-hydrazono]-alkyl}-benzene-1,3-diol with a 3,5-disubstituted phenol and formaldehyde or paraformaldehyde, coordinate transition metal salts, yielding, after treatment with appropriate reducing agents and immobilization on support materials (porous carbons, graphite, metallic powders, etc), very efficient catalysts for electrochemical cells, for example capable of producing powers at ambient temperature and pressure as high as 160 mW/cm², when directly fuelled with methanol, and as high as 300 mW/cm² when fuelled with H₂.

In a first embodiment the present invention refers therefore to nitrogen-oxygen-carbon polymers (hereinafter indicated with P) suitable for the coordination of metal salts other than platinum salts.

According to the invention with nitrogen-oxygen-carbon polymers are intended polymers obtained by condensation of a 4-{1-[(2,4-di(substituted)-phenyl)-hydrazono]-alkyl}-benzene-1,3-diol with a 3,5-disubstituted phenol and formaldehyde or paraformaldehyde in the presence of either a basic (e. g. NaOH) or acid (e. g. HCl) catalyst in water/alcohol mixtures as solvent and at a temperature sufficient to form a methylol intermediate compound (according to Scheme I).

For 4-{1-[(2,4-di(substituted)-phenyl)-hydrazono]-alkyl}-benzene-1,3-diol, according to the invention is intended a compound of formula (A): 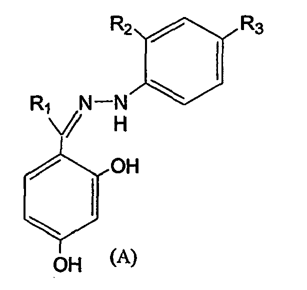 wherein R₁ is chosen in the group consisting of: hydrogen and a hydrocarbon radical, preferably aliphatic, having from 1 to 10 carbon atoms, possibly halogenated, more preferentially methyl or ethyl.

R₂ and R₃ each independently represent a preferentially electron-withdrawing group selected in the group consisting of hydrogen, halogen, acyl, ester, carboxylic acid, formyl, nitrile, sulphonic acid, linear or branched alkyl or aryl groups, having from 1 to 15 carbon atoms, optionally functionalised with halogens or joined to each other to form one or more condensed cycles with the phenyl ring, and nitro groups.

For 3,5-disubstituted phenol according to the invention is intended a compound of formula (B): 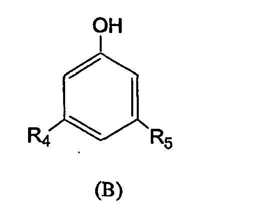 wherein R₄ and R₅ each independently represent an electron-doriating group selected in the group consisting of hydrogen, hydroxyl, ether, amines, aryl and linear and branched alkyl groups, having from 1 to 15 carbon atoms.

According to the invention acyl means a group COR' wherein R' is preferably a C₁₋₁₀ alkyl or aryl, ester means a group COOR' wherein R' is as above defined, ether means a group OR' wherein R' is as above defined, amines means a group NR"R''' wherein R" and R"' same or different from each other are H, C₁₋₁₀ alkyl, aryl; in all the above reported definitions aryl means preferably phenyl, naphtyl and higher homologues.

Between formaldehyde and paraformaldehyde the second is preferred.

The nitrogen-oxygen-carbon polymers P are obtained, see hereinafter, as brick red solids generally soluble in polar organic solvents, such as dimethylsulfoxide, dimethylformamide, 1,4-dioxane, acetone, tetrahydrofuran.

The most likely structure of P is similar to that of a phenolic resin (Bakelite) with phenol units replaced by 4-{1-[(2,4-di(substituted)-phenyl)-hydrazono]-alkyl}-benzene-1,3-diol units that contribute to modulate the chemical-physical properties of the polymer itself. As the two phenol derivatives (A) and (B) can both react with formaldehyde to produce a macromolecular structure, further modulation of P can be achieved by varying their initial molar ratio (A/B); preferably, according to the invention, such initial molar ratio a/b is comprised between 0.5 and 2, more preferably is 0.7.

The polymer according to the invention can also be represented by the following formula (C): 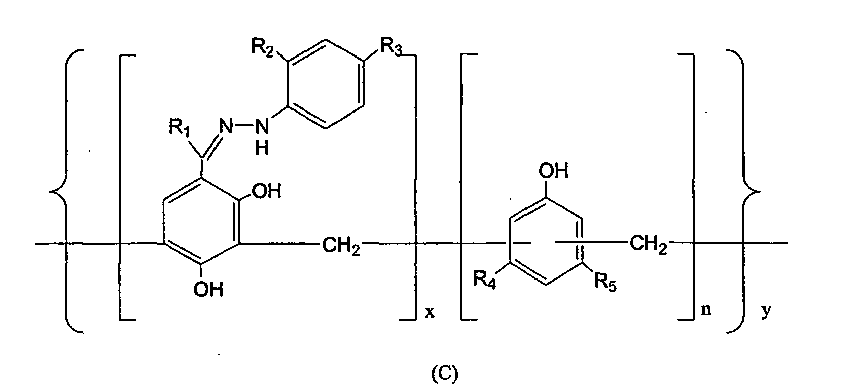 wherein y can vary from 2 to 120, x can vary between 1 and 2, n can vary between 1 and 3 and R₁, R₂, R₃, R₄ and R₅ are as above defined.

As one in the art can realize looking at the above reported formula, the polymer P according to the invention has available both nitrogen and oxygen atoms for binding metal centres, preferentially in chelating fashion. IR and NMR spectra of P show unequivocally the presence of both NH and OH groups. The P materials can be dried at 150 °C for some hours in the air with no decomposition. Average number molecular weights can be modulated in a broad range, between about 1000 and about 50000, by properly varying the experimental conditions.

According to a preferred method of production the polymers P of the invention are obtained by condensation of a 4-{1-[(2,4-di(substituted)-phenyl)-hydrazono]-alkyl}-benzene-1,3-diol with a 3,5-disubstituted phenol and formaldehyde or paraformaldehyde in the presence of either a basic (e. g. NaOH) or acid (e. g. HCl) catalyst in water/alcohol mixtures as solvent at a temperature sufficient to form a methylol intermediate compound (according to the following Scheme I): 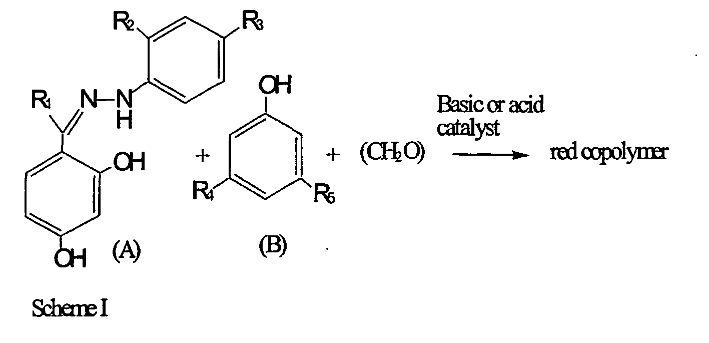 wherein: R₁, R₂, R₃, R₄ and R₅ are as above defined.

The 4-{1-[(2,4-di(substituted)-phenyl)-hydrazono]-alkyl}-benzene-1,3-diol reagents are synthesized via condensation of appropriate 4-acyl/formyl-benzene-1,3-diols with 2,4-disubstituted phenylhydrazines.

The polymers P are also obtained by a one-pot or cascade procedure using as separated components 4-acyl/formyl-benzene-1,3-diol, 2,4-disubstituted phenylhydrazine, 3,5-disubstituted phenols and formaldehyde or paraformaldehyde with the substituents mentioned above.

Preferably the reaction temperature is comprised between about 20 to about 150 °C and the pH ranges from about 1 to about 14.

According to a second embodiment the present invention refers to a complex consisting of a polymer as above described and a metal salt.

In fact the excellent ligating properties of P allow the stable complexation of a large variety of metal salts preferably transition metals salts and, more preferably iron-, cobalt- and nickel-carboxylates, -halides, -alcoholates, -acetylacetonates, - formates, -oxalates, -malonates, and analogous organic salts and mixtures thereof.

Inorganic salts such as carbonates, oxides and bicarbonates, etc., and mixtures thereof, are also suitable for the purpose provided they are capable, according to what is known in inorganic chemistry, of interacting with the polymer P in the reaction environment in order to form a coordination complex.

Fe-, Co- and Ni-acetates (and mixture thereof) are particularly preferred.

The complexes according to the invention can be obtained by stirring a suspension of P with a metal salt or a mixture of metal salts, more preferentially nickel(II), iron(II) and cobalt(II) salts, dissolved preferentially in water or water/alcohol. The reaction produces a material where the metal salt(s) is (are) strongly tethered to P and maintain the oxidation state of the molecular precursors.

The metal-doped materials obtained, hereafter denoted as P-M (M = main group or transition metal) are very stable: they can be washed several times with boiling water without losing the anchored metal salt(s).

Following the preferred procedure described above, the overall metal concentration in the said metal-doped materials P-M can be appropriately varied in the range 0.5-10 wt. %.

Notably, the reaction of P with two metal salts in a desired ratio or the reaction of P with n metal salts in desired ratios gives P-M materials where the original ratio of the added metals is fully maintained. Therefore, the reaction of P with, for example, Fe(OAc)₂, Ni(OAc)₂ and Co(OAc)₂ (OAc = acetate) in a 1:1:1 stoichiometric ratio will give a P-M material containing iron(II), nickel(II) and cobalt(II) ions in a 1:1:1 molar ratio.

According to a further embodiment, the present application refers to catalysts obtained from the above described P-M materials and to electrodes for fuel cells comprising such catalysts in conjunction with a suitable conductive support. Moreover the invention refers also to fuel cells comprising the electrodes according to the invention.

The catalysts of this invention contain metals, other than platinum, more preferentially nickel, cobalt, iron and mixtures thereof and are unexpectedly capable of catalysing the reduction of oxygen as well as the oxidation of various gaseous and liquid substrates (H₂, methanol, ethylene glycol and higher glycols, gasoline, formaldehyde, hydrazine to say but a few). The applicant has also found that these catalysts form efficient electrodes for different types of fuel cells. In particular, the applicant has surprisingly found that the anode requires the presence of nickel, alone or in binary and ternary combinations with cobalt and iron, whereas, in a preferred method, the cathode contains nickel or cobalt alone. Moreover, the cathodes of the invention are fully tolerant to cross-over alcohols, which allows the use of higher alcohol concentrations (up to 50% in volume) than in platinum-based DAFC's.

In order to produce the catalysts of the invention, the P-M materials are treated with reducing agents either in the solid state with H₂ or in fluid solution systems. Therefore, a solid sample of the P-M material is dispersed in a solvent, preferentially water/alcohol mixtures and then treated with a solution of a reducing agent, preferentially an aqueous solution of hydrazine, more preferentially a solution of a tetrahydroborate salt [Y]BH₄ at a temperature between -10 °C and 30 °C, wherein Y is an alkali metal cation, such as Li⁺, Na⁺, K⁺, or an organic cation such as tetraalkylammonium (NR₄)⁺, and bis(triphenylphosphoranylidene)ammonium (PPN⁺), just to say but a few.

According to another process for producing the catalysts of the invention, a solid sample of the P-M material is baked at an appropriate temperature between 500 and 1000 °C, preferentially 800 °C, under inert gas protection (for example N₂, Ar) for about 2 hours.

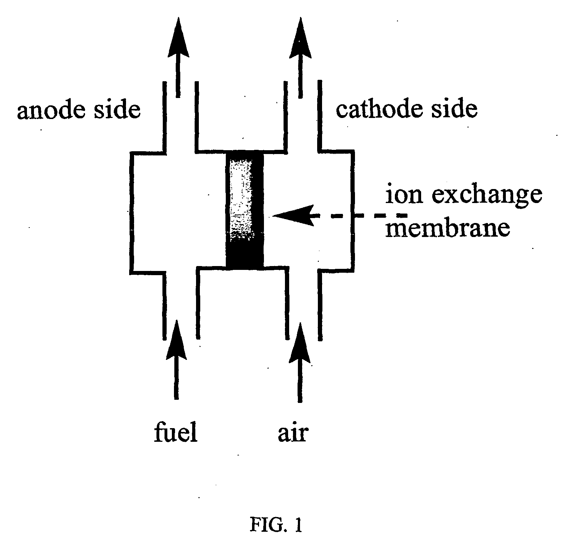

In a preferred method for making the catalysts of the invention, especially to form anodes for fuel cells as exemplified schematically in Figure 1, the P-M materials are preliminary supported on either a porous carbon support material (Vulkan XC-72, active carbon RBDA, standard R-5000, NSM-III, Ketjen black and Raven-1020, graphite, etc.) or other conductive support materials such as finely powdered silver, nickel and others, prior to treatment with reducing agents either in the solid state or in fluid solution systems. The reduction of the metal centres occurs with formation of heterocarbon-supported metal particles (HC-P-M) where M is constituted by a single metal or a mixture of metals other than platinum.

In another preferred method for making anodes for fuel cells, solid P-M materials are treated with a flow of H₂ at about 350-400 °C for about 1-2 hours.

Due to the excellent affinity of P for metal salts, the said heterocarbon-supported catalysts HC-P-M can also be prepared in a one-pot or cascade procedure by mixing P, a metal salt or more than one salt of different metals, and the carbon support in an appropriate solvent and the resulting mixture is treated with a reducing agent such as hydrazine or a tetrahydroborate salt, just to say but a few.

In a preferred method for making the catalysts of the invention HC-P-M, especially to form cathodes for fuel cells, the P-M materials are preliminary supported on either a porous carbon support material (Vulkan XC-72, active carbon RBDA, standard R-5000, NSM-III, Ketjen black and Raven-1020, graphite, etc.) or other conductive support materials such as finely powdered silver, nickel and others, prior to heat-treatment at an appropriate temperature between 500 °C and 1000 °C, preferentially 800 °C, under inert gas protection (for example N₂, Ar) for about 2 hours.

A general procedure for preparing both anodes and cathodes from the catalysts of the invention is as follows:

A portion of HC-P-M is suspended in a 1:1 mixture of water/alcohol with vigorous stirring at room temperature. To this suspension is added with stirring non-wetting agent, such as polytetrafluoroethylene (PTFE) (60 wt % dispersion in water, Aldrich) (ca. 20 wt % with respect to HC-P-M). Vigorous stirring is maintained for ca. 10 min to give a flocculate material. The reaction vessel is sonicated until a rubber-like material is formed, which is separated by decantation. This material is rolled on either carbon paper, sintered graphite, or metallic nets (steel, nickel, etc), and pressed at about 100 Kg/cm². The electrode so formed is baked at 350-400 °C under an inert atmosphere (N₂, Ar).

The present invention is further described by the following examples, which, however, are provided for purely illustrative purposes and do not limit the overall scope of the invention itself.

Three preferred procedures for making the polymer P are described in Examples 1, 2 and 3.

### EXAMPLE 1

To a suspension of 32 g of finely dispersed 4-{1-[(2,4-dinitrophenyl)-hydrazono]-ethyl}-benzene-1,3-diol in 200 mL of water is added 10 g of phenol and 10 mL of aqueous formaldehyde (40 wt. %) at room temperature. To this mixture is added solid NaOH (0.5 g) with stirring. The resulting dark brown suspension is refluxed four 8 hours at 110 °C to give a dark brown solid. The solid is filtered, washed several times with cold water and then added to 500 mL of distilled water. The resulting suspension is gently neutralized to pH 7 with concentrated HCl (37%). The polymer P separates as a dark red solid, which is collected, and washed several times with cold water/acetone mixtures (1:1 v:v) to remove unreacted monomers and low molecular-weight fractions. After purification, P is dried at 60°C for 3-4 hours. Yield 38 g.

### EXAMPLE 2

To a suspension of 32 g of finely dispersed 4-{1-[(2,4-dinitrophenyl)-hydrazono]-ethyl}-benzene-1,3-diol in 200 mL of water are added 10 g of phenol and 10 mL of aqueous formaldehyde (40 wt %) at room temperature. To this mixture is added concentrated (37%) HCl (10 mL) with stirring. The resulting dark brown suspension is refluxed four 8 hours at 110 °C to give a dark brown solid. The solid is filtered, washed several times with cold water and then added to 500 mL of distilled water. The resulting suspension is gently neutralized to pH 7 with an aqueous solution of 1 N NaOH. The polymer P separates as a dark red solid, which is collected, and washed several times with cold water/acetone mixtures (1:1 v:v) to remove unreacted monomers and low molecular-weight fractions. After purification P is dried at 60°C for 3-4 hours. Yield 36 g.

### EXAMPLE 3

To a solution of 5.0 g of (2,4-dichlorophenyl)hydrazine in 1000 mL of methanol is slowly added 10 mL of concentrated sulphuric acid. After dissolution, a mole equivalent amount of (2,4-dihydroxy)-benzophenone is added at room temperature. After 5 minutes, the solution turns orange and a dark brown solid starts to precipitate. The solid is filtered, washed several times with cold water and then suspended in water. The suspension is gently neutralized to pH 7 with concentrated NaOH. The collected dark brown solid is washed several times with cold water and then added to 500 mL of distilled water. An equivalent amount of 3,5-dimethyl phenol is added and the solution is acidified with 10 mL of HCl (37 %). After complete dissolution, a mole equivalent amount of formaldehyde (40 wt % solution) is slowly added with stirring. The resulting solution is refluxed at 110 °C with stirring. After about 8 hours, P separates as a dark red solid, which is collected, and washed several times with cold water/acetone mixtures (1:1, v:v) to remove unreacted monomers and low molecular-weight fractions. After purification P is dried at 60°C for 3-4 hours. Yield 3.9 g.

Characterisation of a typical sample of polymer P, obtained from 4-{1-[(2,4-dinitrophenyl)-hydrazono]-ethyl}-benzene-1,3-diol, phenol and paraformaldehyde, using elementary analysis , Fourier transformed infrared spectroscopy (FT-IR), ultraviolet-visible spectroscopy (UV-Vis) and ¹H and ¹³C{¹H} NMR spectroscopy.
Element. C, 58.60%; H, 4.24%; N:12.15%. (This analysis nicely fits with a polymer of formula C wherein x = 1 and n= 1 Calcd.: C, 58.67%; H, 4.00%; N:12.44%.)
FT-IR: 3600-3200 (vO-H); 3290 (vN-H); 3100 (v aromaticC-H); 1620 (v C=N); 1615 (v aromaticC=C); 1590 (δ N-H); 1530 (vₛ. NO₂); 1514 (vₐₛ. NO₂) 1330 (δ O-H); 830 (v aromaric C-NO₂); 710 (δ aromatic C-H) cm⁻¹.
UV-Vis: λₘₐₓ = 390 nm; shoulder at 420 nm.
¹H NMR (400.13 MHz, 298 K): (CD₃COCD₃): δ = 2.4-2.6 (N=C-CH₃); 3.7-4.1 (ArCH₂-Ar); 6.4-6.3 (C-H, aromatic); 7.0-6.8 (C-H, phenol ring); 7.6-7.4 (C-H, aromatic); 8.5-8.3 (H, phenol ring); 9.0-8.9 (H, aromatic), 9.1-9.0 (Ar-NH-N), 11.4-11.2 (Ar-OH), 12.0-11.8 (Ar-OH).
¹³C NMR: (CD₃COCD₃): δ = 40 (Ar-CH₂-Ar); 102-130 (aromatic); 137 (O₂N-C aromatic); 143 (HN-C aromatic); 159 (Ar-C=N-); 160-161 (HO-C aromatic) ppm.

The polymer P decomposes before melting at temperatures higher than 300°C.

Two preferred procedures for making the catalysts of the invention are described in Examples 4 and 5.

### EXAMPLE 4

In 100 mL of acetone are dissolved 0.50 g of P and 0.30 g of nickel(II) acetate tetrahydrate (Aldrich) at room temperature. The solution is stirred at room temperature until all acetone is evaporated leaving a reddish residue. This solid, said P-M, is introduced into a quartz reactor which is heated to 800 °C under a protective flow of nitrogen for 2 hours. 0.30 g of a black powdered material is obtained, containing nickel in 7.1 wt. % (ICP-AES analysis).

### EXAMPLE 5

In 100 mL of acetone are dissolved 0.5 g of P, 0.13 g of nickel(II) acetate tetrahydrate (aldrich), 0.08 g of iron(II) acetate tetrahydrate (Aldrich), and 0.08 g of cobalt(II) acetate tetrahydrate (Aldrich) at room temperature. The resulting solution is stirred at room temperature until all acetone is evaporated leaving a violet residue. This crude product, said P-M, is introduced into a quartz reactor which is then heated to 360 °C under a flow of H₂ for two hours. 0.6 g of a black powdered material is obtained, containing iron, cobalt and nickel in a ca. 1:1:1 ratio for an overall metal percentage in the product of 9.2 wt. % (ICP-AES analysis).

A preferred procedure for making a cathode from an HC-P-M material of the invention is described in Example 6.

### EXAMPLE 6

In 100 mL of acetone are dissolved 0.50 g of P and 0.30 g of nickel(II) acetate tetrahydrate (Aldrich) at room temperature. To this mixture, containing said P-M, is added 5.0 g of Vulkan XC-72R (previously activated by heating to 800 °C under N₂ for 2 hours, followed by reflux in aqueous HNO₃ (50%)). The resulting mixture is stirred at room temperature until all acetone is evaporated leaving a black residue.

All acetone is removed at reduced pressure. The solid residue is introduced into a quartz reactor which is heated to 800 °C in a flow of nitrogen for 2 hours.

The solid product is dispersed in a 1:1 (vv) mixture of water/ethanol with stirring. To the resulting suspension is added 2.5 g of PTFE (60 wt. % dispersion in water, Aldrich). Vigorous stirring is maintained for ca. 10 min to give a flocculate material. The reaction vessel is sonicated until a rubber-like material is formed, which is separated by decantation. This material is rolled on Teflon^{®}-treated carbon paper (Toray) and pressed at 100 Kg/cm². The electrode so formed is baked at 350 °C under a dinitrogen atmosphere.

Two preferred procedures for making an anode of the invention are described in Examples 7 and 8.

### EXAMPLE 7

In 100 mL of acetone are dissolved 0.5 g of P, 0.10 g of nickel(II) acetate tetrahydrate (aldrich), 0.065 g of iron(II) acetate tetrahydrate (Aldrich), and 0.065 g of cobalt(II) acetate tetrahydrate (Aldrich) at room temperature. To this mixture, containing said P-M, is added 5 g of Vulkan XC-72R, (previously activated by heating to 800 °C under N₂ for 2 hours, followed by reflux in aqueous HNO₃ (50%)). Acetone is removed at reduced pressure. The solid residue is introduced into a quartz reactor which is then heated to 360 °C under a flow of H₂ for 2 hours.

The solid product is dispersed in a 1:1 mixture (vv) of water/ethanol with stirring. To the resulting suspension is added 2.5 g of PTFE (60 wt. % dispersion in water, Aldrich). Vigorous stirring is maintained for ca. 10 min to give a flocculate material. The reaction vessel is sonicated until a rubber-like, slurry material is formed, which is separated by decantation. This material is pressed at 400 Kg/cm² onto a circular steel wire net having a wire thickness of 0.2 mm, a mesh size of 0.2 mm and a radius of 1.75 cm.

### EXAMPLE 8

In 100 mL of acetone are dissolved 0.5 g of P, 0.10 g of nickel(II) acetate tetrahydrate (Aldrich), 0.065 g of iron(II) acetate tetrahydrate (Aldrich), and 0.065 g of cobalt(II) acetate tetrahydrate (Aldrich) at room temperature. To this mixture, containing said P-M, is added 5.0 g of Vulkan XC-72R, (previously activated by heating to 800 °C under N₂ for 2 hours, followed by reflux in aqueous HNO₃ (50%)). After stirring for 10 min at 0 °C, 10 mL of an aqueous solution of NaBH₄ (10 wt.%) is added dropwise (CAUTION: the evolved H₂ gas may react with solid catalyst deposited onto the reactor walls). Stirring is maintained for 30 min at room temperature. The solid product is separated by filtration, and washed several times with water/ethanol (1:1, vv). Then, the solid product is added to a 1:1 (vv) mixture of water/ethanol with stirring. To the resulting suspension is added 2.5 g of PTFE (60 wt. % dispersion in water, Aldrich). Vigorous stirring is maintained for ca. 10 min to give a flocculate material. The reaction vessel is sonicated until a rubber-like material is formed, which is separated by decantation. This material is pressed at 400 Kg/cm² onto a circular steel wire net having a wire thickness of 0.2 mm, a mesh size of 0.2 mm and a radius of 1.75 cm.

### Electrochemical measurements

Samples of the electrodes according to the invention were prepared as square planar 0.5 cm² platelets. Cyclic voltammetry was used to test the anodes towards ferrocene (FcH) oxidation, while the cathodes were tested towards tetracyanoethylene (TCNE) reduction. In both cases were employed CH₂Cl₂ solutions containing [NBu₄][PF₆] (0.2 M) as supporting electrolyte.

Table - 1 summarizes the electrochemical results obtained with an anode of the invention, containing Fe-Co-Ni in a 1:1:1 molar ratio, and a cathode of the invention, containing Ni, and also reports comparisons with known electrode materials of common use in fuel cells. The electrochemical data are provided for purely illustrative purposes and do not limit the electrochemical performance of the catalysts of the invention.

**Table 1. Formal electrode potentials (V, vs. SCE) and peak-to-peak separation (mV) for the one-electron oxidation of FcH and the one-electron reduction of TCNE at different electrode materials (CH₂Cl₂ solution; [NBu₄][PF₆] (0.2 M).**

| Electrode | FcH oxidation | | TCNE reduction | |
|---|---|---|---|---|
| | E°' | ΔEₚ^{a} | E°' | ΔEPₚ^{a} |
| Fe-Co-Ni-based anode of the invention | +0.41 | 60 | | |
| Anode Pt-Ru^{b} | +0.38 | 180 | | |
| Graphite | +0.39 | 150 | | |
| Glassy carbon | +0.42 | 85 | | |
| Ni-based cathode of the invention | | | +0.21 | 60 |
| Cathode Pt^{c} | | | +0.21 | 133 |
| Graphite | | | +0.22 | 152 |
| Glassy carbon | | | +0.23 | 65 |

| | | | | |
|---|---|---|---|---|
| ^{a} Measured at 0.05 nVs⁻¹. ^{b} From Fuel Cell Scientific ^{c} From Fuel Cell Scientific | | | | |

In view of the fact that the electrochemical reversibility of one-electron processes is shown up by a peak-to-peak separation of 59 mV at ambient temperature, it is apparent that the electrodes of the invention behave as effective electron exchangers and, in this sense, are better than the commercial Pt-based electrodes examined.

The electrodes of the invention were tested in typical fuel-cell working conditions, for example 2N H₂SO₄ and 1 N KOH, at 25 °C, CH₃OH 1 M and saturated with air.

As shown in Figures 1-4, in either acid or basic solutions, the electrode materials of the invention show high current densities, comparable or even better to/than those of the commercially available materials investigated.

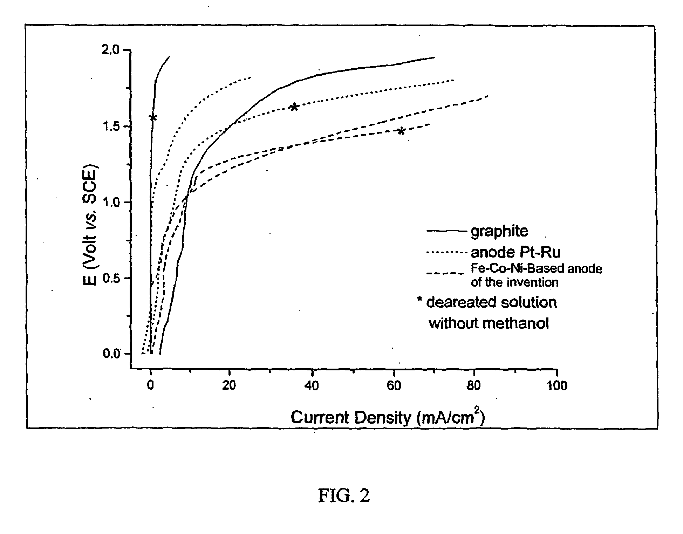

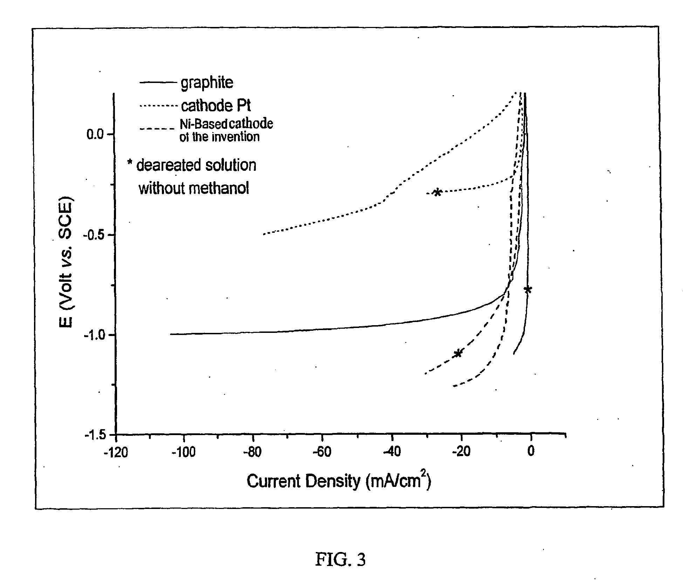

Figures 2 and 3 show the anodic and cathodic polarization curves recorded by single sweep voltammetry for the different anode and cathode materials in 2N H₂SO₄ solution, respectively.

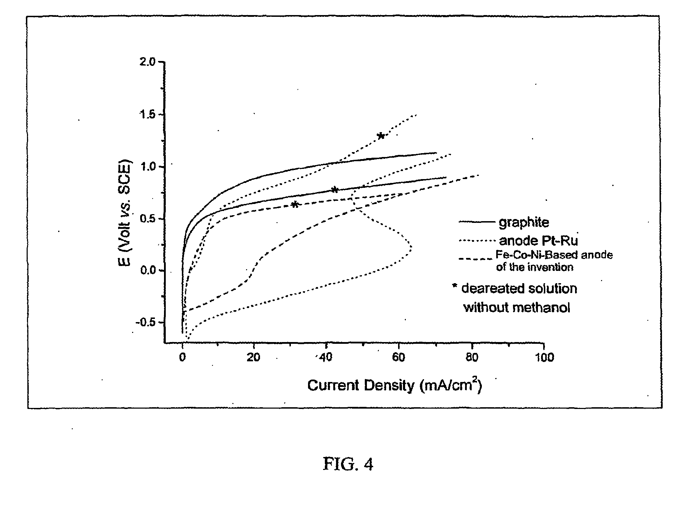

Comparisons are provided with the corresponding behaviour in deaerated aqueous conditions. The signs of the currents follow the IUPAC convention. Figures 3 and 4 show the pertinent polarization curves recorded in KOH solution.

Electrodes made with the catalysts of the invention, preferentially anodes formed with ternary or binary combinations of Fe, Co and Ni on a conductive support material, and cathodes containing Ni or Co alone on a conductive support material, can be used in single, self-breathing Direct Oxidation Fuel Cells (DOFC), preferentially Direct Alcohol Fuel Cells (DAFC), and more preferentially Direct Methanol Fuel Cells (DMFC), or in Polymer Electrolyte Fuel cells (PEFC) known in the art, showing open circuit voltages (OCV) as high as 1.18 V at ambient temperature (fuelled with H₂). Appropriate combinations of the metals in the catalyst of the invention can provide a specific power as high as 300 mW/cm² at ambient temperature and pressure. The cathodes of the invention are fully tolerant to alcohols, therefore to cross-over alcohols in DAFC's. Commercially available cationic and anionic membranes can equally be used.

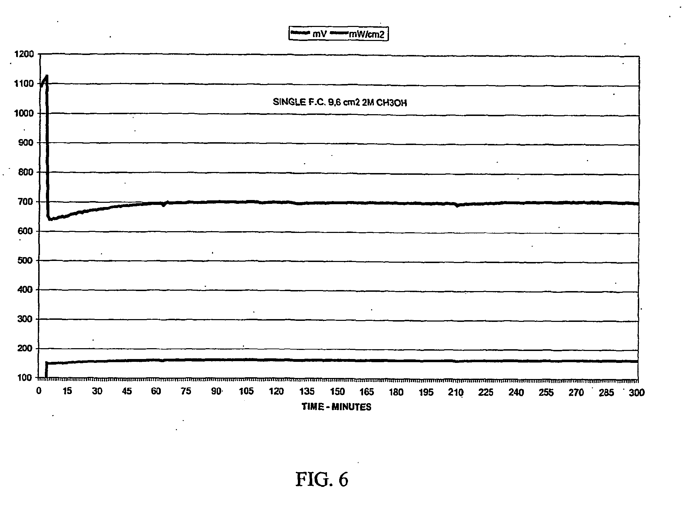

As an example, Figure 6 shows the performance of a DMFC formed with electrodes of the invention (Ni-based cathode; Fe-Co-Ni-based anode).

## Claims

1. Nitrogen-oxygen-carbon polymers obtained by condensation of a 4-{1-[(2,4-di(substituted)-phenyl)-hydrazono]-alkyl}-benzene-1,3-diol with a phenol or a 3-substituted phenol or a 3,5-disubstituted phenol and formaldehyde or paraformaldehyde in the presence of either a basic (e.g. NaOH) or acid (e.g. HCl) catalyst in water/alcohol mixtures as solvent and at a temperature comprised between 20-150°C and having an average molecular weight comprised between 1000 and 50000, with the proviso that the 3-substituted phenol can not be resorcinol.

2. Polymers according to claim 1 wherein the 4-{1-[(2,4-di(substituted)-phenyl)-hydrazono]-alkyl}-benzene-1,3-diol is a compound of formula 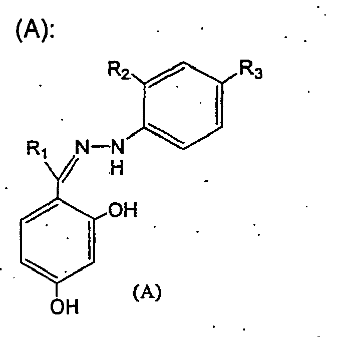 wherein R₁ is chosen in the group consisting of: hydrogen and a hydrocarbon radical, having from 1 to 10 carbon atoms, possibly halogenated;
R₂ and R₃ each independently represent an electron-withdrawing group selected in the group consisting of hydrogen, halogen, acyl, ester, carboxylic acid, formyl, nitrile, sulphonic acid, linear or branched alkyl or aryl groups, having from 1 to 15 carbon atoms, optionally functionalised with halogens or joined to each other to form one or more condensed cycles with the phenyl ring, and nitro groups.

3. Polymer according to claims 1 and 2 wherein the 3,5-disubstituted phenol is a compound of formula (B): 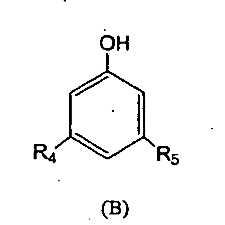 wherein R₄ and R₅ each independently represent an electron-donating group selected in the group consisting of hydrogen, hydroxyl, ether, amines, aryl and linear and branched alkyl groups, having from 1 to 15 carbon atoms, with the proviso that the 3-substituted phenol can not be resorcinol.

4. Polymers according to Claims 1 - 3 having general formula (C) 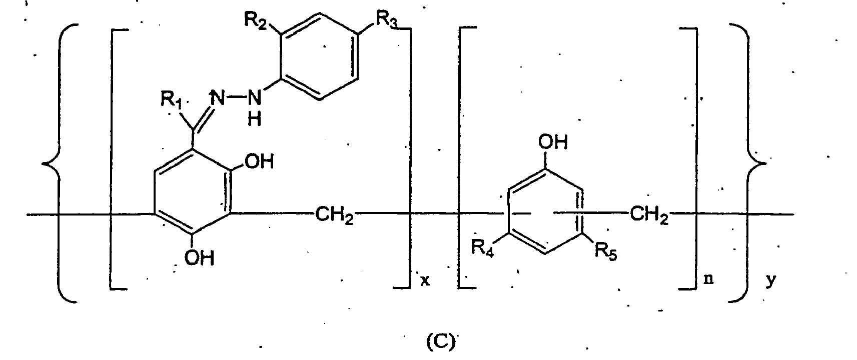 wherein y can vary from 2 to 120, x can vary between 1 and 2, n can vary between 1 and 3 and R₁, R₂, R₃, R₄ and R₅ are as above defined.

5. Metal complexes consisting of a polymer according to Claims 1 - 4 and a meta) salt other than platinum salts.

6. Metal complexes according to Claim 5 wherein the metal salt is chosen in the group consisting of iron-, cobalt- and nickel-carboxylates, -halides, -alcoholates, -acetylacetonates, -formates, -oxalates, -malonates, and analogous organic salts and mixtures thereof or -carbonates, -oxides and -bicarbonates, and mixtures thereof.

7. Complexes according to Claim 6 chosen in the group consisting of: Fe-, Co- and Ni-acetates (and mixture thereof).

8. Catalysts consisting of the complexes according to claims 5 - 7 wherein the metal is reduced either in the solid state with H₂ or in fluid solution systems with appropriate reducing agents.

9. Catalysts consisting of the complexes according to claims 5 - 7 wherein the said metal complexes are pyrolysed at a temperature between 500 and 1000 °C, preferentially 800 °C, under inert gas protection (for example N₂, Ar) for about 2 hours.

10. Electrodes (anodes and cathodes) consisting of the catalysts according to Claims 8 - 9 and a suitable conductive support.

11. Anodes consisting of the catalysts according to Claims 8 - 9 comprising binary or ternary combinations of Fe, Co and Ni and a suitable conductive support.

12. Cathodes consisting of the catalysts according to Claims 8 - 9 comprising Ni or Co and a suitable conductive support.

13. A process for preparing a nitrogen-oxygen-carbon polymer according to Claims 1 - 4 wherein said reaction is carried out by condensation of a 4-{1-[(2,4-di(substituted)-phenyl)-hydrazono]-alkyl}-benzene-1,3-diol with a 3,5-disubstituted phenol and formaldehyde or paraformaldehyde in the presence of a basic catalysts.

14. A process according to claim 13 wherein said reaction is carried out in the presence of an acid catalyst.

15. A process according to claims 13 and 14 wherein said reaction is carried out in the temperature range from about 20 to about 150 °C and in the pH range from about 1 to about 14.

16. A process according to claims 13 - 15 wherein said reaction is carried out in either a one-pot or cascade procedure using as separated components a 4-acyl/formyl-benzene-1,3-diol, a 2,4-disubstituted phenylhydrazine, a 3,5-disubstituted .phenol and formaldehyde or paraformaldehyde.

17. A process for preparing a complex according to claims 5 - 7 by dissolving a polymer according to Claim 1-3 and one or more salts in an appropriate solvent or mixture of solvents, preferentially acetone, in the temperature range from about 20 °C to about 60 °C and submitting the obtained product to reduction..

18. A process according to Claim 17 wherein a mixture of metal salts chosen in the group consisting of nickel(II), iron(II) and cobalt(II) salts, alone or in binary or ternary combinations in a preferred stoichiometric ratio is used.

19. A process according to Claim 18 wherein the metal(s) loadings are in the range of about 0.5 % to about 10 % of the total elements plus metal weight.

20. A process according to Claims 17 - 19 wherein the reduction step is performed with a flow of H₂ at a temperature between 350 °C and 400 °C for 1-2 hours.

21. A process according to Claims 17 - 19 wherein the reduction step is performed on the complex dispersed in a solvent, with an aqueous solution of hydrazine, or a solution of a tetrahydroborate salt [Y]BH₄, wherein Y is Li⁺, Na⁺, K⁺, NR₄⁺, PPN⁺ and R₄ is as defined in Claim 3 and PPN⁺ is bis(triphenylphosphoranylidene)ammonium, at a temperature between 0 °C and 20 °C for 30 minutes-1 hour.

22. A process for preparing a catalyst according to Claims 8 - 9 wherein the metal-doped polymers P-M are pyrolysed at temperatures ranging from 500 to 1000 °C under inert gas protection (for example N₂, Ar) for 1-2 hours.

23. A process for preparing an electrode according to Claims 10 - 11 in the form of anode for fuel cells, involving mixing together the metal doped polymer materials and either a porous carbon support material or other conductive support materials prior to the reduction treatment according to Claims 20 - 21.

24. A process according to claim 23 wherein a single metal or a binary or ternary combinations of nickel, iron and cobalt in a preferred stoichiometric ratio, with metal loadings in the range of about 0.5 % to about 1.0 % of the total elements plus metal weight are used.

25. A process for preparing an electrode according to Claims 10 and 12 in the form of alcohol-tolerant cathodes for fuel cells, comprising mixing together the metal doped polymer and either a porous carbon support material or other conductive support materials prior to heat-treatment at temperatures ranging from about 500 °C to about 1000 °C under inert gas protection (for example N₂, Ar) for 1-2 hours.

26. A process according to Claim 25 wherein the metal doped polymer contains a metal or a mixture of metals with metal loadings in the range of about 0.5 % to about 10 % of the total carbon plus metal weight.

27. Anodes for Direct Oxidation Fuel cells (DOFC) or Direct Alcohol Fuel Cells (DAFC), formed with a catalysed carbon substrate according to Claims 23 - 24 containing metals chosen in the group consisting of iron, cobalt and nickel.

28. Alcohol-tolerant cathodes for Direct Oxidation Fuel cells (DOFC), or Direct Alcohol Fuel Cells (DAFC), formed with a catalysed carbon substrate according to claims 25 - 26, containing nickel.

29. Direct Oxidation Fuel Cells (DOFC) or Direct Alcohol Fuel Cells (DAFC) comprising an anode and a cathode according to claims 11 and 12 and a solid electrolyte membrane, either anionic or cationic, capable of producing open circuit voltages (OCV) as high as 1.13 V and powers as high as 160 mW/cm² at ambient temperature and pressure.

30. Polymer Electrolyte Fuel Cells (PEFC) fuelled with H₂ comprising an anode catalysed with iron, cobalt and nickel in a stoichiometric ratio with an overall metal loading between 0.5 and 8% wt according to Claim 11 capable of producing open circuit voltages (OCV) as high as 1.18 V and power densities as high as 300 mW/cm², in conjunction with a cathode of the present invention or a cathode of the state of the art and a solid electrolyte membrane of the state of art.

31. Polymer Electrolyte Fuel Cells (PEFC) fuelled with H₂ comprising a cathode catalysed by nickel in loadings between 0.5 -7% wt according to Claim 12 capable of producing open circuit voltages (OCV) as high as 1.18 V and power densities as high as 300 mW/cm² in conjunction with an anode of the present invention or an anode of the state of the art and a solid electrolyte membrane of the state of art.

32. Fuel cells comprising electrodes according to claims 10 - 12.

## Patentansprüche

1. Stickstoff-Sauerstoff-Kohlenstoff-Polymere, erhalten durch Kondensation eines 4-{1-[(2,4-Di(substituierten)-phenyl)-hydrazono]-alkyl}-benzol-1,3-diols mit einem Phenol oder einem 3-substituierten Phenol oder einem 3,5-disubstituierten Phenol und Formaldehyd oder Paraformaldehyd in der Gegenwart eines basischen (z.B. NaOH) oder sauren (z.B. HCl)-Katalysators in Wasser/Alkohol-Mischungen als Lösungsmittel und bei einer Temperatur im Bereich zwischen 20 und 150°C und mit einem durchschnittlichen Molekulargewicht zwischen 1.000 und 50.000, mit dem Vorbehalt, dass das 3-substituierte Phenol nicht Resorcin ist.

2. Polymere nach Anspruch 1, worin das 4-{1-[(2,4-Di(substituierte)-phenyl)-hydrazono]-alkyl}-benzol-1,3-diol eine Verbindung der Formel (A) ist: 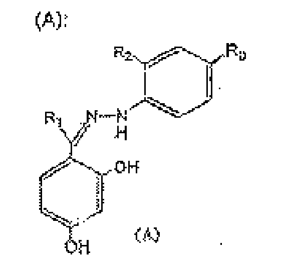 worin R₁ aus der Gruppe ausgewählt ist, bestehend aus: Wasserstoff und einem Kohlenwasserstoffradikal mit 1 bis 10 Kohlenstoffatomen, das möglicherweise halogeniert ist;
R₂ und R₃ jeweils unabhängig eine Elektronen ziehende Gruppe sind, ausgewählt aus der Gruppe bestehend aus Wasserstoff, Halogen, Acyl, Ester, Carbonsäure, Formyl, Nitril, Sulfonsäure, linearer oder verzweigter Alkyl- oder Arylgruppe mit 1 bis 15 Kohlenstoffatomen, wahlweise funktionalisiert mit Halogenen oder aneinander gebunden, unter Bildung von einem oder mehreren kondensierten Zyklen mit dem Phenylring, und Nitrogruppen.

3. Polymer nach den Ansprüchen 1 und 2, worin das 3,5-disubstituierte Phenol eine Verbindung der Formel (B) ist: 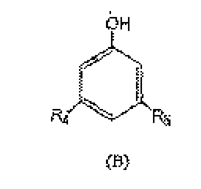 worin R₄ und R₅ jeweils unabhängig eine Elektronen gebende Gruppe sind, ausgewählt aus der Gruppe bestehend aus Wasserstoff, Hydroxyl, Ether, Aminen, Aryl- und linearen oder verzweigten Alkylgruppen mit 1 bis 15 Kohlenstoffatomen mit dem Vorbehalt, dass das 3-substituierte Phenol nicht Resorcin sein kann.

4. Polymere nach den Ansprüchen 1-3 mit der allgemeinen Formel (C): 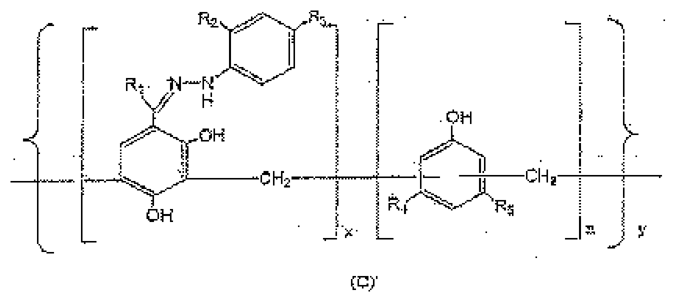 worin y von 2 bis 120 variieren kann, x zwischen 1 und 2 variieren kann, n zwischen 1 und 3 variieren kann und R₁, R₂, R₃, R₄ und R₅ wie oben definiert sind.

5. Metallkomplexe, bestehend aus einem Polymer nach den Ansprüchen 1 bis 4 und einem anderen Metallsalz als Platinsalzen.

6. Metallkomplexe nach Anspruch 5, worin das Metallsalz ausgewählt ist aus der Gruppe, bestehend aus Eisen-, Kobalt- und Nickelcarboxylaten, -halogeniden, -alcoholaten, -acetylacetonaten, -formiaten, -oxalaten, -malonaten und analogen organischen Salzen und Mischungen davon oder -carbonaten, -oxiden und -bicarbonaten und Mischungen davon.

7. Komplexe nach Anspruch 6, ausgewählt aus der Gruppe bestehend aus Fe-, Co- und Ni-Acetaten (und Mischungen davon).

8. Katalysatoren der Komplexe nach den Ansprüchen 5-7, worin das Metall im festen Zustand mit H₂ oder in Fluidlösungssystemen mit angemessenen Reduktionsmitteln reduziert ist.

9. Katalysatoren, bestehend aus den Komplexen nach den Ansprüchen 5-7, worin die Metallkomplexe bei einer Temperatur zwischen 500 und 1.000°C, bevorzugt 800°C unter Inertgasschutz (z.B. N₂, Ar) für etwa 2 Stunden pyrolisiert sind.

10. Elektroden (Anoden und Kathoden), bestehend aus den Katalysatoren nach den Ansprüchen 8-9 und einem geeigneten leitenden Träger.

11. Anoden, bestehend aus den Katalysatoren nach den Ansprüchen 8-9, umfassend binäre oder ternäre Kombinationen aus Fe, Co und Ni und einen geeigneten leitenden Träger.

12. Kathoden, bestehend aus den Katalysatoren nach den Ansprüchen 8-9, umfassend Ni oder Co und einen geeigneten leitenden Träger.

13. Verfahren zur Erzeugung eines Stickstoff-, Sauerstoff-, Kohlenstoff-Polymers nach den Ansprüchen 1-4, worin die Reaktion durch Kondensation eines 4-{1-[(2,4-Di(substituierten)-phenyl)-hydrazon]-alkyl}-benzol-1,3-diols mit einem 3,5-disubstituierten Phenol und Formaldehyd oder Paraformaldehyd in der Gegenwart von basischen Katalysatoren durchgeführt wird.

14. Verfahren nach Anspruch 13, worin die Reaktion in der Gegenwart eines sauren Katalysators durchgeführt wird.

15. Verfahren nach den Ansprüchen 13 und 14, worin die Reaktion im Temperaturbereich von etwa 20 bis etwa 150°C und im pH-Bereich von etwa 1 bis etwa 14 durchgeführt wird.

16. Verfahren nach den Ansprüchen 13-15, worin die Reaktion entweder in einem Eintopf- oder einem Kaskadenvorgang unter Verwendung eines 4-Acyl/formyl-benzol-1,3-diols, eines 2,4-disubstituierten Phenylhydrazins, eines 3,5-disubstituierten Phenols und Formaldehyd oder Paraformaldehyd als getrennte Komponenten durchgeführt wird.

17. Verfahren zur Herstellung eines Komplexes nach den Ansprüchen 5-7 durch Auflösen eines Polymers nach den Ansprüchen 1-3 und eines oder mehrerer Salze in einem angemessenen Lösungsmittel oder einer Mischung aus Lösungsmitteln, bevorzugt Aceton, im Temperaturbereich von etwa 20 bis etwa 60°C und Durchführen einer Reduktion mit dem erhaltenen Produkt.

18. Verfahren nach Anspruch 17, worin eine Mischung aus Metallsalzen, ausgewählt aus der Gruppe bestehend aus Nickel(II)-, Eisen(II)- und Kobalt(II)-Salzen, alleine oder in binären oder ternären Kombinationen in einem bevorzugten stöchiometrischen Verhältnis verwendet wird.

19. Verfahren nach Anspruch 18, worin die Metallbeladungen im Bereich von etwa 0,5 bis etwa 10% der gesamten Elemente plus dem Metallgewicht sind.

20. Verfahren nach den Ansprüchen 17-19, worin der Reduktionsschritt mit einem H₂-Fluss bei einer Temperatur zwischen 350 und 400°C für 1-2 Stunden durchgeführt wird.

21. Verfahren nach den Ansprüchen 17-19, worin der Reduktionsschritt mit dem Komplex, der in einem Lösungsmittel dispergiert ist, mit einer wässrigen Lösung aus Hydrazin oder einer Lösung aus einem Tetrahydroboratsalz [Y]BH₄, worin Y Li⁺, Na⁺, K⁺, NR₄⁺, PPN⁺ ist und R₄ wie in Anspruch 3 definiert ist, und worin PPN⁺ Bis(triphenylphosphoranyliden)ammonium ist, bei einer Temperatur zwischen 0°C und 20°C für 30 Minuten bis 1 Stunde durchgeführt wird.

22. Verfahren zur Herstellung eines Katalysators nach den Ansprüchen 8-9, worin die metalldotierten Polymere P-M bei Temperaturen im Bereich von 500 bis 1.000°C unter Inertgasschutz (z.B. N₂, Ar) für 1-2 Stunden pyrolisiert werden.

23. Verfahren zur Herstellung einer Elektrode nach den Ansprüchen 10-11 in der Form einer Anode für Brennstoffzellen, umfassend das Mischen der metalldotierten Polymermaterialien und entweder eines porösen Kohlenstoffträgermaterials oder anderer leitender Trägermaterialien vor der Reduktionsbehandlung nach den Ansprüchen 20-21.

24. Verfahren nach Anspruch 23, worin ein einzelnes Metall oder eine binäre oder ternäre Kombination aus Nickel, Eisen und Kobalt in einem bevorzugten stöchiometrischen Verhältnis mit Metallbeladungen im Bereich von etwa 0,5 bis etwa 10% der gesamten Elemente plus Metallgewicht verwendet werden.

25. Verfahren zur Herstellung einer Elektrode nach den Ansprüchen 10 und 12 in der Form von alkoholtoleranten Kathoden für Brennstoffzellen, umfassend das Mischen des metalldotierten Polymers und eines porösen Kohlenstoffträgermaterials oder anderer leitender Trägermaterialien vor der Wärmebehandlung bei Temperaturen im Bereich von etwa 500 bis etwa 1.000°C unter Intertgasschutz (z.B. N₂, Ar) für 1-2 Stunden.

26. Verfahren nach Anspruch 25, worin das metalldotierte Polymer ein Metall oder eine Mischung aus Metallen mit Metallbeladungen im Bereich von etwa 0,5 bis etwa 10% des gesamten Kohlenstoffes plus Metallgewichts umfasst.

27. Anoden für direkte Oxidations-Brennstoffzellen (DOFC) oder direkte Alkohol-Brennstoffzellen (DAFC), gebildet mit einem katalysierten Kohlenstoffsubstrat nach den Ansprüchen 23-24, umfassend Metalle, ausgewählt aus der Gruppe bestehend aus Eisen, Kobalt und Nickel.

28. Alkoholtolerante Kathoden für direkte Oxidations-Brennstoffzellen (DOFC) oder direkte Alkohol-Brennstoffzellen (DAFC), gebildet mit einem katalysierten Kohlenstoffsubstrat nach den Ansprüchen 25-26, umfassend Nickel.

29. Direkte Oxidations-Brennstoffzellen (DOFC) oder direkte Alkohol-Brennstoffzellen (DAFC), umfassend eine Anode und eine Kathode nach den Ansprüchen 11 und 12 und eine feste Elektrolytmembran, entweder anionisch oder kationisch, die in der Lage ist, offene Kreislaufspannungen (OCV) von 1,13 V und Leistungen von 160 mW/cm² bei Umgebungstemperatur und Druck zu erzeugen.

30. Polymere Elektrolyt-Brennstoffzellen (PEFC), angetrieben mit H₂, umfassend eine mit Eisen, Kobalt und Nickel in einem stöchiometrischen Verhältnis katalysierte Anode mit einer Gesamtmetallbeladung zwischen 0,5 und 8 Gew.-% nach Anspruch 11, die in der Lage ist, offene Kreislaufspannungen (OCV) von 1,18 V und Energiedichten von 300 mW/cm² zu erzeugen, zusammen mit einer Kathode dieser Erfindung oder einer Kathode des Standes der Technik und einer festen Elektrolytmembran des Standes der Technik.

31. Polymere Elektrolyt-Brennstoffzellen (PEFC), angetrieben mit H₂, umfassend eine Kathode, katalysiert durch Nickel, in Beladungen zwischen 0,5 und 7 Gew.-% nach Anspruch 12, die in der Lage ist, offene Kreislaufspannungen (OCV) von 1,18 V und Energiedichten von 300 mW/cm² zu erzeugen, in Verbindung mit einer Anode dieser Erfindung oder einer Anode des Stands der Technik und eine feste Elektrolytmembran des Stands der Technik.

32. Brennstoffzellen, umfassend Elektroden nach den Ansprüchen 10-12.

## Revendications

1. Polymères d'azote-oxygène-carbone obtenus par condensation d'un 4-{1-[(2,4-phényl-di(substitué)-hydrazono]-alkyl}benzène-1,3-diol avec un phénol ou un phénol 3-substitué ou un phénol 3,5-disubstitué et du formaldéhyde ou du paraformaldéhyde en présence d'un catalyseur basique (e.g. NaOH) ou acide (e.g. HCl) dans des mélanges eau/alcool comme solvant et à une température comprise entre 20-150°C et ayant un poids moléculaire moyen compris entre 1000 et 50000, à condition que le phénol 3-substitué ne puisse être résorcinol.

2. Polymères selon la revendication 1, où le 4-{1-[(2,4-diphényl-di(substitué)-hydrazono]-alkyl}benzène-1,3-diol est un composé de la formule (A) : 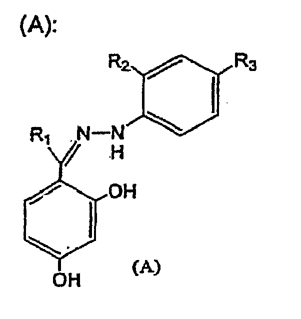 où R₁ est choisi dans le groupe consistant en : hydrogène et un radical hydrocarbure ayant de 1 à 10 atomes de carbone, éventuellement halogéné ;
chacun de R₂ et R₃ représente indépendamment un groupe retirant des électrons sélectionné dans le groupe consistant en hydrogène, halogène, acyle, ester, acide carboxylique, formyle, nitrile, acide sulfonique, groupes alkyles ou aryles linéaires ou ramifiés, ayant de 1 à 15 atomes de carbone, facultativement fonctionnalisés avec des halogènes ou joints les uns aux autres pour former un ou plusieurs cycles condensés avec le cycle phényle et des groupes nitro.

3. Polymère selon les revendications 1 et 2, où le phénol 3,5-disubstitué est un composé de formule (B) : 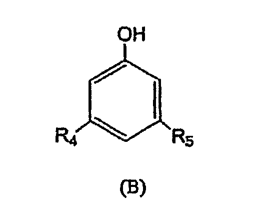 où R₄ et R₅ représentent chacun indépendamment un groupe donneur d'électrons sélectionné dans le groupe consistant en hydrogène, hydroxyle, éther, amines, groupes aryles et alkyles linéaires et ramifiés ayant de 1 à 15 atomes de carbone, à condition que le phénol 3-substitué ne puisse être résorcinol.

4. Polymères selon les revendications 1 à 3 ayant la formule générale (C) 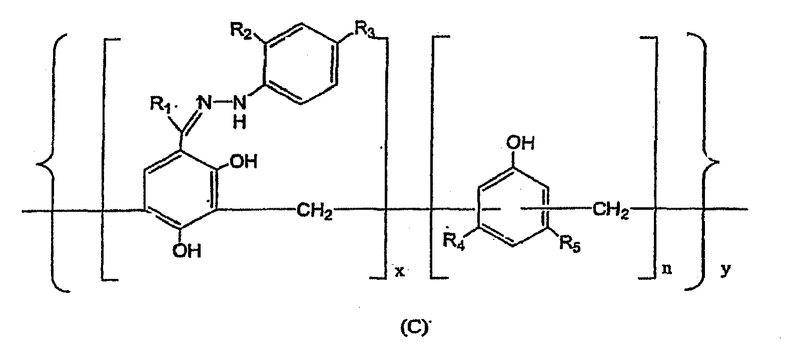 où y peut varier de 2 à 120, x peut varier entre 1 et 2, n peut varier entre 1 et 3 et R₁,R₂,R₃, R₄ et R₅ sont tels que définis ci-dessus.

5. Complexes de métaux consistant en un polymère selon les revendications 1 - 4 et un sel de métal autre que des sels de platine.

6. Complexes de métaux selon la revendication 5, où le sel de métal est choisi dans le groupe consistant en fer-, cobalt- et nickel-carboxylates, -halogénures, -alcoolates, -acétylacétonates, -formiates, -oxalates, -malonates et sels organiques analogues et leurs mélanges ou -carbonates, -oxydes et -bicarbonates et leurs mélanges.

7. Complexes selon la revendication 6, choisis dans le groupe consistant en : acétates de Fe, Co et Ni (et leurs mélanges).

8. Catalyseurs consistant en les complexes selon les revendications 5 - 7, où le métal est réduit soit à l'état solide avec H₂ ou dans des systèmes en solution fluide avec des agents réducteurs appropriés.

9. Catalyseurs consistant en les complexes selon les revendications 5 - 7, où lesdits complexes de métaux sont pyrolysés à une température comprise entre 500 et 1000°C, de préférence à 800°C, sous protection d'un gaz inerte (par exemple N₂, Ar) pendant environ 2 heures.

10. Electrodes (anodes et cathodes) consistant en les catalyseurs selon les revendications 8 - 9 et un support conducteur approprié.

11. Anodes consistant en les catalyseurs selon les revendications 8 - 9 comprenant des combinaisons binaires ou ternaires de Fe, Co et Ni et un support conducteur approprié.

12. Cathodes consistant en les catalyseurs selon la revendications 8 - 9 comprenant Ni ou Co et un support conducteur approprié.

13. Procédé de préparation d'un polymère d'azote-oxygène-carbone selon les revendications 1 - 4, où ladite réaction est effectuée par condensation d'un 4-{1-[(2,4-phényl-di(substitué)-hydrazono]-alkyl}benzène-1,3-diol avec un phénol 3,5-disubstitué et du formaldéhyde ou du paraformaldéhyde en présence de catalyseurs basiques.

14. Procédé selon la revendication 13, où ladite réaction est effectuée en présence d'un catalyseur acide.

15. Procédé selon les revendications 13 et 14, où ladite réaction est effectuée dans la gamme de température d'environ 20 à environ 150°C et dans la gamme de pH d'environ 1 à environ 14.

16. Procédé selon les revendications 13 - 15, où ladite réaction est effectuée en un processus en un pot ou en cascade en utilisant, comme composants séparés, un 4-acryl/formyl-benzène-1,3-diol, une phénylhydrazine 2,4-disubstituée, un phénol 3,5-disubstitué et du formaldéhyde ou du paraformaldéhyde.

17. Procédé de préparation d'un complexe selon les revendications 5 - 7 en dissolvant un polymère selon les revendications 1 - 3 et un ou plusieurs sels dans un solvant approprié ou mélange de solvants, de préférence de l'acétone, dans la gamme de température d'environ 20°C et à environ 60°C et en soumettant le produit obtenu à une réduction.

18. Procédé selon la revendication 17, où un mélange de sels de métaux choisi dans le groupe consistant en sels de nickel(II), fer(II) et cobalt(II), seuls ou en combinaisons binaires ou ternaires à un rapport stoechiométrique préféré, est utilisé.

19. Procédé selon la revendication 18, où les charges de métal ou métaux sont dans la gamme d'environ 0,5% à environ 10% des éléments totaux plus le poids du métal.

20. Procédé selon les revendications 13 - 19, où l'étape de réduction est accomplie avec un flux de H₂ à une température comprise entre 350°C et 400°C pendant 1-2 heures.

21. Procédé selon les revendications 17 - 19, où l'étape de réduction est accomplie sur le complexe dispersé dans un solvant avec une solution aqueuse d'hydrazine ou une solution d'un sel de tétrahydroborate [Y]BH₄, où Y est Li⁺, Na⁺, K⁺, NR₄⁺, PPN⁺ et R₄ est tel que défini à la revendication 3 et PPN⁺ est bis(triphénylphosphoranylidène) ammonium, à une température comprise entre 0°C et 20°C pendant 30 minutes-1 heure.

22. Procédé de préparation d'un catalyseur selon les revendications 8 - 9 où les polymères P-M dopés de métal sont pyrolysés à des températures comprises entre 500 et 1000°C sous protection d'un gaz inerte (par exemple N₂,Ar) pendant 1-2 heures.

23. Procédé de préparation d'une électrode selon les revendications 10 - 11, sous la forme d'une anode pour des piles à combustible, impliquant un mélange des matériaux polymères dopés de métal et d'un matériau de support en carbone poreux ou autres matériaux conducteurs de support avant traitement de réduction selon les revendications 20 - 21.

24. Procédé selon la revendication 23, où un seul métal ou des combinaisons binaires ou ternaires de nickel, fer et cobalt à un rapport stoechiométrique préféré, avec des charges de métal dans la gamme d'environ 0,5% à environ 10% des éléments totaux plus le poids du métal, sont utilisées.

25. Procédé de préparation d'une électrode selon les revendications 10 et 12, sous la forme de cathodes tolérant des alcools pour des piles à combustible, comprenant le mélange du polymère dopé de métal et soit d'un matériau de support en carbone poreux ou d'autres matériaux conducteurs de support avant traitement thermique à des températures comprises entre environ 500°C et environ 1000°C sous protection d'un gaz inerte (par exemple N₂, Ar) pendant 1-2 heures.

26. Procédé selon la revendication 25, où le polymère dopé de métal contient un métal ou un mélange de métaux avec des charges de métal dans la gamme d'environ 0,5% à environ 10% du carbone totale plus le poids du métal.

27. Anodes pour Piles à Combustible à Oxydation Directe (DOFC) ou Piles à Combustible à Alcool Direct (DAFC), formées avec un substrat de carbone catalysé selon les revendications 23 - 24 contenant des métaux choisis dans le groupe consistant en fer, cobalt et nickel.

28. Cathodes tolérant l'alcool pour Des Piles à Combustible à Oxydation Directe (DOFC) ou Des Piles à Combustible à Alcool Direct (DAFC) formées avec un substrat de carbone catalysé selon les revendications 25 - 26, contenant du nickel.

29. Piles à Combustible à Oxydation Directe (DOFC) ou Piles à Combustible à Alcool Direct (DAFC) comprenant une anode et une cathode selon les revendications 11 et 12 et une membrane d'électrolyte solide, soit anionique ou cationique, capable de produire des tensions en circuit ouvert (OCV) pouvant atteindre 1,13 V et des puissances pouvant atteindre 160 Mw/cm² à température et à pression ambiantes.

30. Piles à Combustible de Polymère Electrolyte (PEFC) alimentées avec H₂, comprenant une anode catalysée avec du fer, du cobalt et du nickel à un rapport stoechiométrique avec une charge totale de métal entre 0,5 et 8% en poids selon la revendication 11, capable de produire des tensions en circuit ouvert (OCV) pouvant atteindre 1,18 V et des densités de puissance pouvant atteindre 300 mW/cm², en conjonction avec une cathode de la présente invention ou cathode de l'état de l'art et une membrane d'électrolyte solide de l'état de l'art.

31. Piles à Combustible de Polymère Electrolyte (PEFC) alimentées en H₂, comprenant une cathode catalysée par du nickel à des charges entre 0,5-7% en poids selon la revendication 12, capables de produire des tensions en circuit ouvert (OCV) pouvant atteindre 1,18 v et des densités de puissance aussi élevées que 300 mW/cm² en conjonction avec une anode de la présente invention ou une anode de l'état de l'art et une membrane d'électrolyte solide de l'état de l'art.

32. Piles à combustible comprenant les électrodes selon les revendications 10 - 12.
